# EUROPÄISCHE PATENTSCHRIFT

(11) **EP 0 988 780 B1**
(45) Veröffentlichungstag und Bekanntmachung des Hinweises auf die Patenterteilung: **15.11.2006**
(21) Anmeldenummer: 99116451.8
(22) Anmeldetag: 21.08.1999
(51) Int. Cl.: A01C 17/00, A01C 15/00

(54) **Verfahren zum Rand- und/oder Grenzstreuen**
Method for spreading along edges or boundaries
Procédé pour l'épandage au long de bords ou limites

(30) Priorität: 24.09.1998 DE 19843745; 24.09.1998 DE 19843746; 24.09.1998 DE 19843747; 22.01.1999 DE 19902496
(43) Veröffentlichungstag der Anmeldung: 29.03.2000
(60) Teilanmeldung: 06003345.3
(73) Patentinhaber: Amazonen-Werke H. Dreyer GmbH & Co. KG, 49205 Hasbergen (DE)
(72) Erfinder: Dreyer, Heinz, Dr. Dipl.-Ing, 49205 Hasbergen (DE); Walter, Achim, 49078 Osnabrück (DE); Lührmann, Johannes, 49134 Wallenhorst (DE)

(56) Entgegenhaltungen:
- DE-A- 3 739 265
- US-A- 4 763 844

## Beschreibung

Die Erfindung betrifft einen Zentrifugaldüngerstreuer gemäß des Oberbegriffes des Patentanspruches 1.

Bei Schleuderdüngerstreuern besteht der Wunsch, je nach dem ob die Feldrandgrenze benachbart zu einem Nachbarfeld oder an einen Weg oder Wassergraben angrenzend liegt, das Rand- oder Grenzstreuen durchzuführen. Beim sogenannten Randstreuen wird in Kauf genommen, daß wenn die Feldrandgrenze an einem weiteren Feld angrenzend liegt, daß, um eine möglichst vollständige Düngung bis zum Feldrand zu erreichen, ein Teil des Düngers auf das angrenzende Feld geworfen wird. Beim Grenzstreuen jedoch, wenn die Feldrandgrenze an einen Weg oder Wassergraben angrenzt, darf kein Dünger über die Feldrandgrenze hinausgeworfen werden.

Zentrifugaldüngerstreuer sind in der europäischen Offenlegungsschrift 0 127 922 beschrieben. Um bei dieser Maschine das Grenzstreuen durchzuführen, sind Leitelemente aufweisende Grenzstreueinrichtungen zur Erzeugung eines Streubildes mit einer zur Grenze steil abfallenden Streuflanke und zur Begrenzung der Wurfweite der Düngerpartikel im Grenzbereich vorgesehen. Bei dieser Grenzstreueinrichtung werden die von beiden Schleuderscheiben abgeschleuderten Düngerpartikel sehr stark abgebremst. Die Leitelemente sind als Bremsplatten ausgebildet und bremsen die abgeschleuderten Düngerpartikel so stark ab, daß sie nicht über die Grenze hinaus fliegen. Durch dieses sehr starke Abbremsen wird der Dünger zerschlagen und zerrieben. Hierdurch sind nur verhältnismäßig kleine Grenzstreuabstände zu verwirklichen. Die Düngerkörner werden durch die Bremsplatten nicht umgelenkt, um gezielt bis an die Grenze geworfen zu werden, sondern es wird die Geschwindigkeitsenergie durch Bremsplatten, ähnlich wie bei dem Abbremsen von Fahrzeugen, vernichtet. Dieses bedeutet, daß die Länge der Flugbahn der Düngerkörner durch das Abbremsen erheblich verkürzt wird.

Diese bekannte Grenzstreueinrichtung läßt sich nur auf eine bestimmte Arbeitsbreite für das Grenzstreuen einstellen. D.h., daß sich diese Grenzstreueinrichtung nur für eine bestimmte Arbeitsbreite einsetzten läßt, wenn kein Dünger über die Feldrandgrenze auf Wegen oder in Gräben geworfen werden soll. Diese Grenzstreueinrichtung läßt sich nicht für das sogenannte Randstreuen einsetzen, wenn die Feldrandgrenze nicht an einen Weg oder einen Graben, sondern zu einem Nachbarfeld endet. In diesen Fällen möchten die Landwirte nicht das sogenannte Grenzstreuen, sondern das Randstreuen durchführen. Beim Randstreuen wird akzeptiert, daß eine gewisse Menge Dünger über die Feldrandgrenze auf das Nachbarfeld geworfen wird, um eine möglichst vollständige Düngung bis zur Feldrandgrenze zu erreichen.

Ein weiterer Zentrifugaldüngerstreuer wird beispielsweise in der DE-OS 37 39 265 beschrieben. Bei diesem Zentrifugaldüngerstreuer ist jeder Schleuderscheibe ein eigener regelbarer Antriebsmotor zugeordnet. Um mit diesem Düngerstreuer das Grenzstreuen oder Randstreuen durchzuführen, wird die Drehzahl der der Grenze benachbarten Schleuderscheibe abgesenkt, um so ein unsymmetrisches Streubild mit einer in einer Randzone steil abfallenden Streuflanke zur Feldgrenze zu erreichen. Hierbei hat sich gezeigt, daß die Wurfweite der Düngerkörner zur Feldrandgrenze abnimmt, so daß sich ein unsymmetrisches Streubild mit einer zur Randzone steil abfallenden Streuflanke zur Feldrandgrenze ergibt. Es hat sich jedoch in der Praxis gezeigt, daß sich im Bereich der Feldrandgrenze in manchen Fällen eine Düngeranhäufung ergibt, so daß im der Feldrandgrenze benachbarten Randstreifen eine Überdüngung entsteht, während in einem entfernteren Bereich von der Feldrandgrenze eine Unterdüngung entsteht.

Der Erfindung liegt die Aufgabe zugrunde, einen Streuer zum Rand- oder Grenzstreuen mit einem einseitig zur Feldrandgrenze steil abfallenden Streubild mit einem Schleuderdüngerstreuer vorzuschlagen, welche entsprechend einfach einzustellen ist.

Diese Aufgabe wird erfindungsgemäß durch die kennzeichnenden Merkmale des Anspruches 1 gelöst.

Infolge dieser Maßnahmen läßt sich die Grenzstreueinrichtung sowohl für das Randstreuen wie für das Grenzstreuen verwenden. Hierdurch wird ein Zentrifugaldüngerstreuer geschaffen, mit dem der Landwirt auf einfache Weise sowohl das Grenzstreuen wie das Randstreuen durchführen kann. Der Landwirt kann also, je nachdem wie seine Feldrandgrenze liegt (benachbart zu einem Nachbarfeld - Randstreuen oder angrenzend an einen Weg oder Wassergraben - Grenzstreuen), den Streuer zum Grenz- oder Randstreuen einsetzen, in dem er die Grenzstreueinrichtung in die entsprechende Position einstellt. Beim Randstreuen wird eine fast vollständige Düngung bis zur Feldrandgrenze erreicht, wobei akzeptiert wird, daß eine Teilmenge auf das Nachbarfeld geworfen wird. Beim Grenzstreuen wird verlangt, daß möglichst keine Düngerkörner über die Feldrandgrenze geworfen werden.

Als vorteilhaft hat sich herausgestellt, daß die Grenzstreueinrichtung zur Verstellung zwischen Randstreu- und Grenzstreuposition um eine etwa mit der Drehachse der Grenze zugewandten Schleuderscheibe verschwenkbar bzw. verschiebbar ist. Hierdurch wird eine einfache Umstellung gewährleistet.

Eine sowohl für das Grenzstreuen wie für das Randstreuen einsetzbare Grenzstreueinrichtung läßt sich dadurch in einfacher Weise schaffen, daß die Leitelemente der Grenzstreueinrichtung im der Schleuderscheibe zugewandten Bereich jeweils etwa tangential zur Abwurfrichtung der Düngerkörner angeordnet sind und im sich anschließenden Bereich, die die Ablenkrichtung festlegt, gegenüber der ursprünglichen Abwurfrichtung entgegengesetzt der Drehrichtung der Wurfschaufel und nach hinten ablenkend angestellt sind. Hierdurch wird eine schonende Umlenkung des Düngers erreicht. Der Dünger wird von den Leitelementen der Grenzstreueinrichtung nicht abgebremst, sondern zum Feld und in den Bereich des Feldrandes und des Feldrandbereiches möglichst gezielt umgelenkt, so daß das gewünschte Streubild mit der zur Feldrandgrenze hin steil abfallenden Streuflanke entsteht. Der Dünger wird also durch die Leitelemente möglichst zielgerichtet umgelenkt. Durch dieses "vorsichtige" Umlenken des Düngers wird ein Zerschlagen des Düngers verhindert, so daß diese Grenzstreueinrichtung auch bei großen Arbeitsbreiten sowohl zum Grenz- wie auch zum Randstreuen eingesetzt werden kann. Die Düngerenergie wird nicht durch Abbremsen vernichtet, sondern die Düngerkörner werden umgelenkt, so daß sie bis an der, von der Streuermitte gemessen, bis zu 15m und mehr liegenden Feldrandgrenze geworfen werden können. Durch die besondere Ausbildung der Leitelemente, wird den Körnern ein Drall mitgegeben, der sich vorteilhaft für die Erzeugung des Grenz- und Randstreubereiches des Streubildes auswirkt. Aufgrund der erfindungsgemäßen Anstellung und Anordnung der Leitelemente, werden die Düngerkörner nicht "abgebremst", sondern es findet eine "weich" beginnende Umlenkung durch die im Anfangsbereich etwa tangential zur Abwurfrichtung angestellten Leitelemente statt. Somit wird die Flugbahn der Düngerkörner gezielt zur Erzielung der steil abfallenden Streufläche im Rand- und Grenzbereich verändert. Die Düngerkörner werden also quasi unter fast vollständiger Erhaltung der Geschwindigkeitsenergie schonend umgelenkt. Ein Zerschlagen der Düngerkörner wird weitestgehend vermieden.

Um die Leitelemente, die die Düngerkörner durch Eingriff in die Flugbahn gezielt umlenken, in einfacher Weise herstellen zu können, ist erfindungsgemäß vorgesehen, daß die Leitelemente aus zwei winkelig zueinander angestellten ebenen Flächen bestehen. Um eine gleichmäßige Düngerverteilung, insbesondere auch im Feldrandbereich in einfacher Weise zu erhalten, ist vorgesehen, daß die Abwinkelung der Flächen zueinander von Leitelement zu Leitelement, in Drehrichtung der Schleuderscheiben gesehen, größer wird. Die kontinuierliche oder abschnittsweise Steigerung der Umlenkung der Körner durch die entsprechende Winkelstellung der Leitelemente wird die gezielte Umlenkung der Düngerkörner in Drehrichtung der Schleuderscheiben und zur Fahrtrichtungsebene erreicht.

Mit dem erfindungsgemäßen Grenzstreuschirm lassen sich sowohl das Rand- und Grenzstreuen in den Einsatzfällen durchführen, bei der die Feldrandgrenze in halber Arbeitsbreite des Zentrifugaldüngerstreuers von der Streuermitte entfernt liegt.

Weitere Einzelheiten der Erfindung sind der Beispielsbeschreibung und den Zeichnungen zu entnehmen. Hierbei zeigen
- Fig.1: den Schleuderstreuer in der Draufsicht und in Prinzipdarstellung,
- Fig.2: die Anordnung der Schleuderscheiben und der Grenzstreueinrichtung in der Draufsicht, in vergrößertem Maßstab und in Prinzipdarstellung,
- Fig.3: ein Normalstreubild in Prinzipdarstellung,
- Fig.4: die Streufächer zur Erzielung des Normalstreubildes gemäß Fig.3 in Prinzipdarstellung,
- Fig.5: ein Randstreubild in Prinzipdarstellung,
- Fig.6: die Lage der Streufächer für das Randstreuen zur Erzielung des Randstreubildes gemäß Fig.5 in Prinzipdarstellung,
- Fig.7: die Einstellung des Grenzstreuschirmes und die Ablenkung der Düngerpartikel gemäß der Verfahrensweise nach Fig.5 und 6 in Prinzipdarstellung,
- Fig.8: ein Grenzstreubild in Prinzipdarstellung,
- Fig.9: die Lage der Streufächer für das Grenzstreuen zur Erzielung des Grenzstreubildes gemäß Fig.8 in Prinzipdarstellung und
- Fig.10: die Einstellung des Grenzstreuschirmes und die Ablenkung der Düngerpartikel gemäß der Verfahrensweise nach Fig.8 und 9 in Prinzipdarstellung,

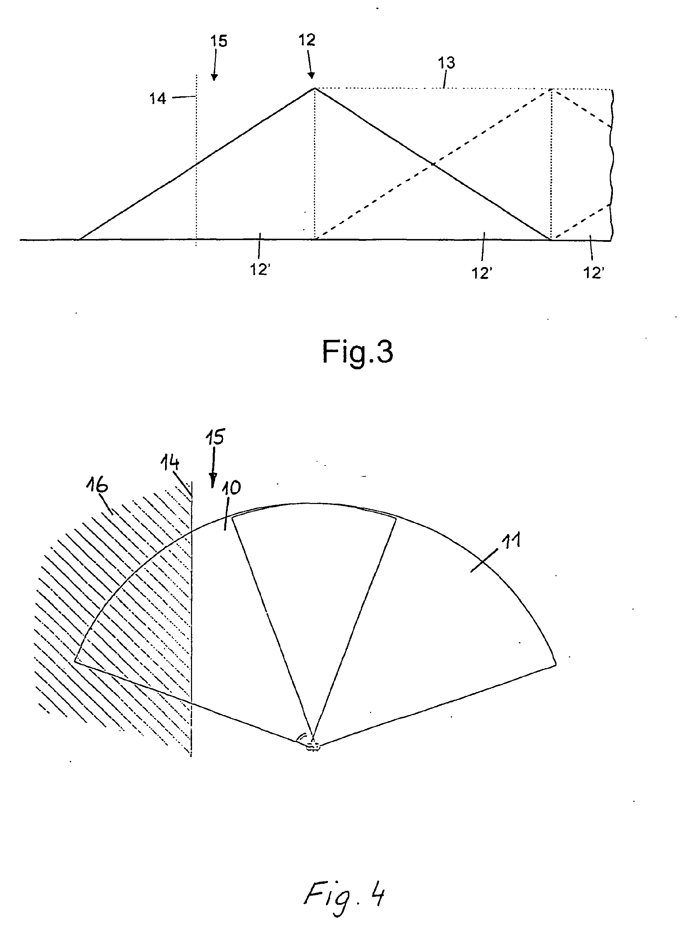

Der Zentrifugaldüngerstreuer weist den Rahmen 1 auf, über den der Zentrifugaldüngerstreuer an einen Dreipunktkraftheber eines Ackerschleppers anbaubar ist. An dem Rahmen 1 ist der Vorratsbehälter 2 angeordnet. Der Vorratsbehälter 2 ist durch ein dachförmiges Mittelteil 3 in zwei Auslauftrichter 4 aufgeteilt. Den unteren Enden des Auslauftrichters 4 sind mittels Schieber einstellbare Auslauföffnungen zugeordnet, die die Dosierorgane 5 bilden. Über diese Dosierorgane 5 wird den unterhalb der Dosierorgane 5 angeordneten Schleuderscheiben 6 das sich im Vorratsbehälter 2 befindliche Material in einstellbaren Mengen zugeführt. Die Schleuderscheiben 6 werden über eine nicht dargestellte Antriebseinrichtung im entgegengesetzten Drehsinn zueinander, wie durch die Pfeile 7 und 8 verdeutlicht ist, angetrieben. Auf den Schleuderscheiben 6 sind die Wurfschaufeln 9 angeordnet, die das über die Dosierorgane 5 zudosierte Material breitflächig jeweils in einem Streufächer 10 bzw. 11, wie in Fig.4 schematisch dargestellt ist, verteilt. Hierbei entsteht, wie in Fig.3 dargestellt ist, eine dreieckförmige Streugutverteilung 12, so daß sich durch nebeneinanderliegende Streubahnen 12' eine gleichmäßige Düngerverteilung 13 ergibt.

Wenn nun am Feldrand 14 der Feldrandstreifen 15 bestreut wird, so liegt die zu befahrene Fahrgasse im halben Arbeitsbreitenabstand zu dem Feldrand 14, so daß, wie die Fig.3 und 4 zeigen, ein Teil des Düngers über die Feldrandgrenze auf das benachbarte Feld 16 oder in angrenzende Flächen, wie beispielsweise Wegen oder Gräben 17 geworfen wird.

Um nun entweder das Randstreuen oder Grenzstreuen, insbesondere für Arbeitsbreiten von bis zu ca. 15m durchführen zu können, wird eine Grenzstreueinrichtung 18 zur Begrenzung der Wurfweite und zur Erzielung steil abfallender Streuflanken 19 im der Feldrandgrenze 14 zugewandten Bereich 20 erzielt wird, eingesetzt. Die Grenzstreueinrichtung 18 weist mehrere aufrechtstehend angeordnete Düngerleitplatten 21 auf. Die Funktionsweise der Grenzstreueinrichtung 18 wird im folgenden näher erläutert.

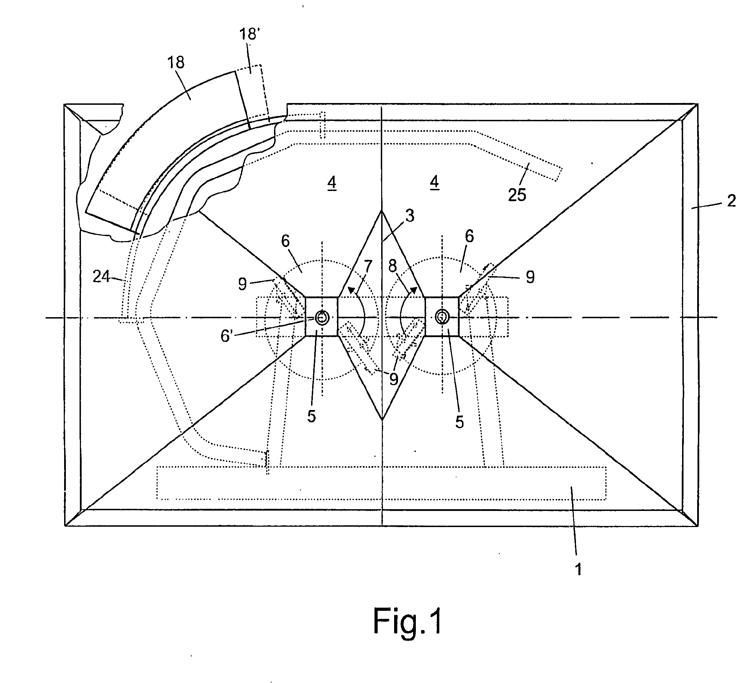

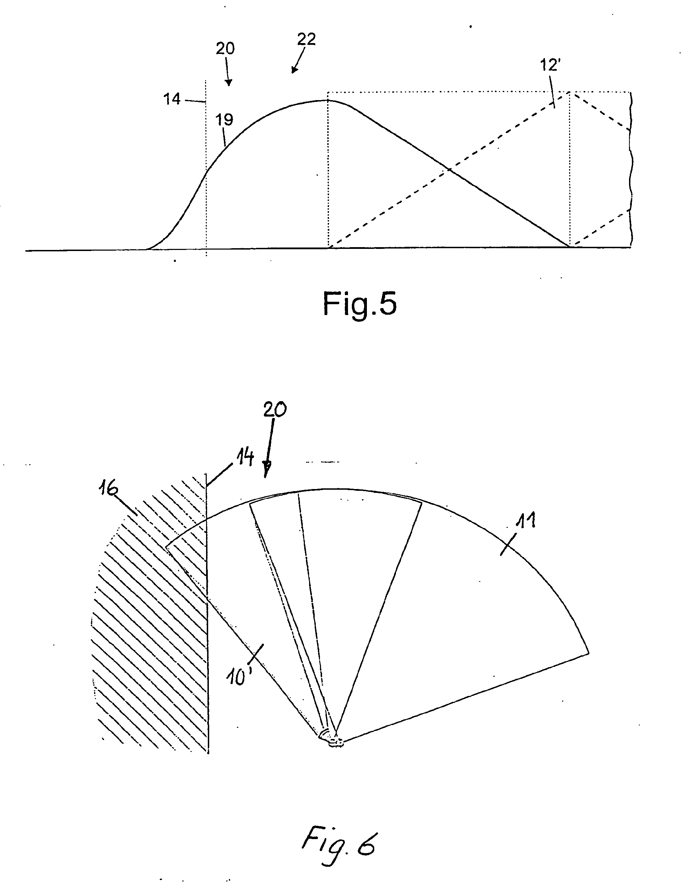

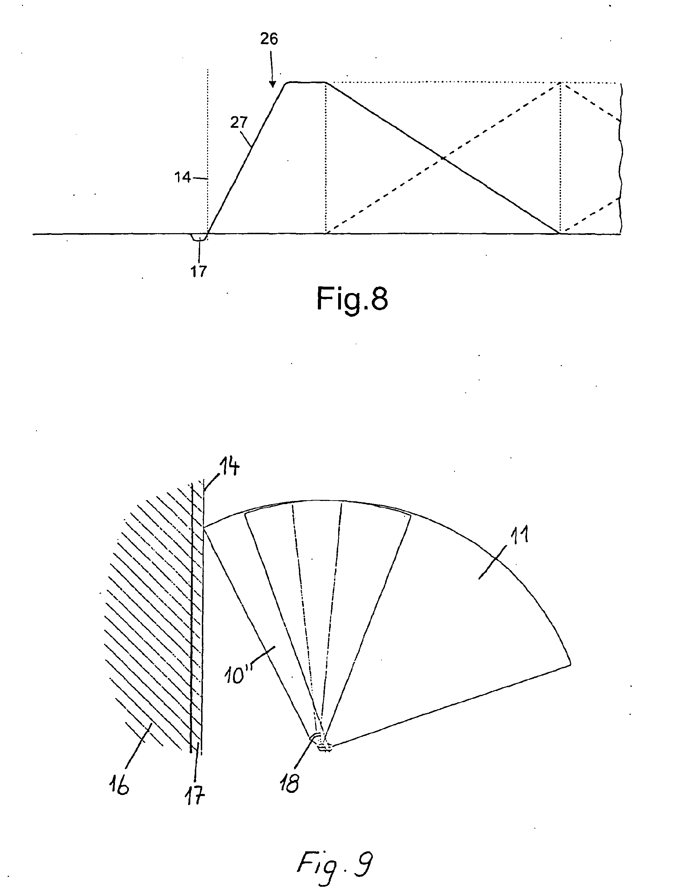

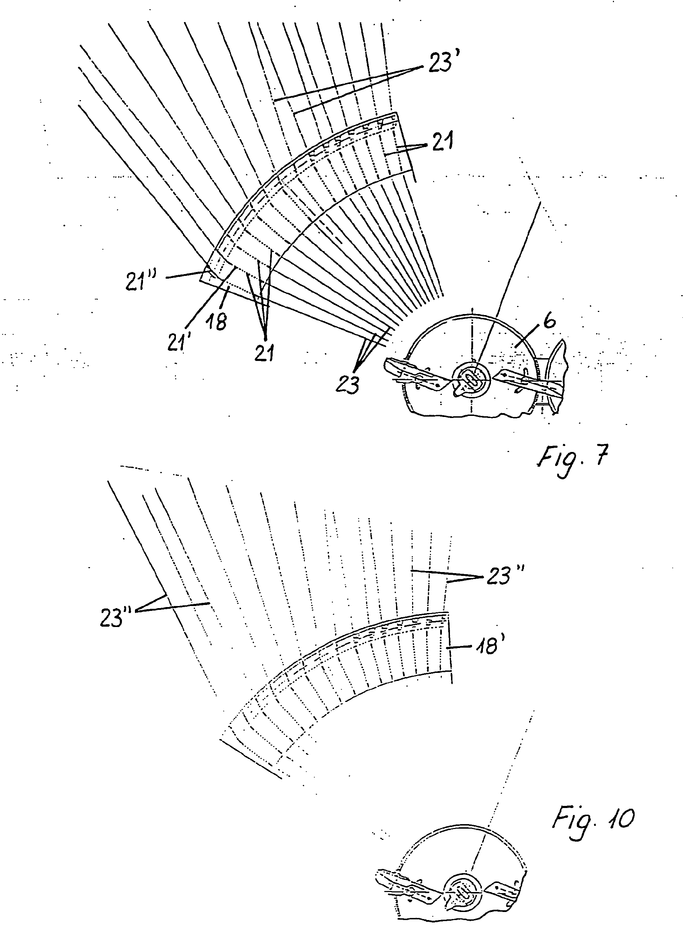

Wenn das sogenannte Randstreuen gemäß den Fig.5 und 6 durchgeführt werden soll, befindet sich der Grenzstreuschirm in der in Fig.1 und 2 sowie Fig.7 eingezeichneten Randstreustellung. Hierbei werden die in dem in den Fig.3 und 4 schraffiert dargestellten Bereich 16 abgeschleuderten Düngerpartikel derart umgelenkt, daß das in den Fig.5 und 6 entstehende Randstreubild 22 entsteht. Hierbei lenken die Leitelemente 21 des Grenzstreuschirmes 18 die Düngerpartikel ab, wie dieses die Fig. 6 und 7 zeigen. Hierbei wird der Streufächer 10 gemäß Fig.4 zu dem Streufächer 10' gemäß Fig.6 umgeformt. Die Flugbahnen 23 und 23' der Düngerkörner sind in der Fig.7 vereinfacht dargestellt. Die Leitelemente 21 der Grenzstreueinrichtung 18 sind im der Schleuderscheibe 6 zugewandten Bereich 21' jeweils etwa tangential zur Abwurfrichtung (Flugbahn 23) der Düngerkörner angeordnet (vgl. Fig.7). Im sich anschließenden Bereich 21'', die die Ablenkrichtung (Flugbahn 23') festlegt, sind die Leitelemente 21 gegenüber der ursprünglichen Abwurfrichtung 23 entgegengesetzt der Drehrichtung 7 der Wurfschaufeln 9 und nach hinten ablenkend angestellt. Die Leitelemente 21 bestehen aus zwei winkelig zueinander angestellten ebenen Flächen 21' und 21''. Die Abwinkelung der Flächen 21' und 21'' zueinander wird, in Drehrichtung der Schleuderscheiben gesehen, von Leitelement 21 zu Leitelement 21 größer.

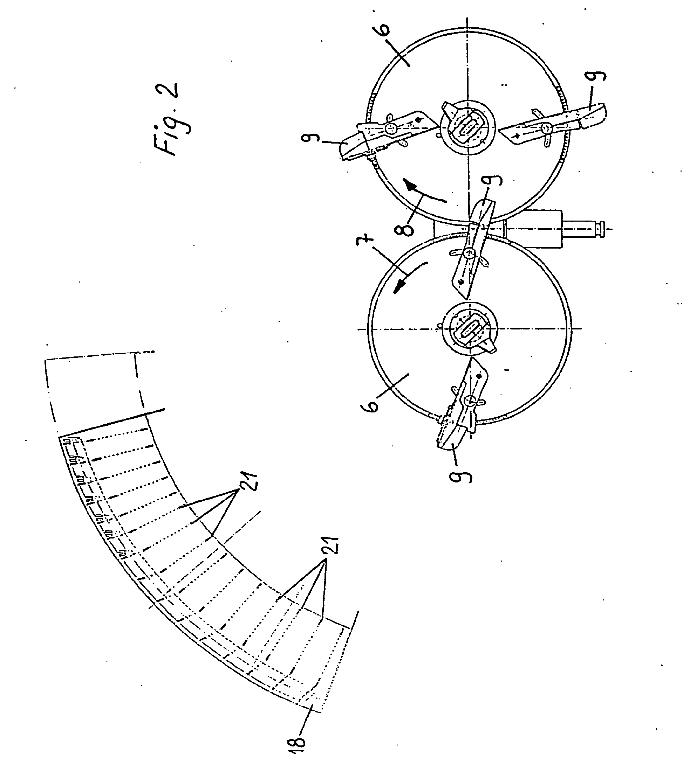

Wenn nun an Stelle des Randstreuens gemäß den Fig.5 und 6 das sogenannte Grenzstreuen, d.h., daß nach Möglichkeit keine Düngerkörner über die Feldrandgrenze 14 hinaus in angrenzende Gräben 17 oder auf angrenzende Wege geworfen werden sollen, wird die Grenzstreueinrichtung 18, aus der in den Fig.1 und 2 mit durchzogenen Linien dargestellten Position in die mit strichpunktierten Linien dargestellte Grenzstreuposition 18' verschwenkt. Hierbei ist die Grenzstreueinrichtung 18 an einer Haltevorrichtung 24 derart verschwenkbar oder verschiebbar, daß das Verschwenken und Verschieben um eine etwa mit der Drehachse der der Grenze zu gewandten Schleuderscheibe 6 erfolgt. Der Bügel 24, an dem die Grenzstreueinrichtung 18 verschiebbar angeordnet ist, ist an einem Schutzbügel 25 angeordnet, der gleichzeitig das zu nahe Herantreten an die rotierenden Schleuderscheiben 6 sicherstellt.

In der Grenzstreuposition 18' der Grenzstreueinrichtung 18 werden die abgeflogenen Düngerkörner in ihrer Flugbahn 23' durch die Leitelemente 21 entsprechend der in den Fig.6 und 10 dargestellten Abflugrichtung 23'' umgelenkt, so daß das in den Fig. 8 und 9 entstehende Streubild 26 mit der zur Feldrandgrenze 14 steil abfallenden Streuflanke 27 bzw. Streufächer 10'' entstehen.

Hierbei wird gleichzeitig mit der Verschwenkung des Grenzstreuschirms 18 auch die der der Grenze 14 zugewandten Schleuderscheibe 6 zugeführten Düngermenge durch eine entsprechende Verstellung des Dosierorgans 5 reduziert, so daß sich im Streubild 26 im Randbereich keine Düngeranhäufung ergibt.

Die Halterung 24 des Grenzstreuschirms 18 ist derart ausgebildet, daß der Grenzstreuschirm 18 in Fahrtrichtung derart weit nach vorn geschoben werden kann, daß er den Vorratsbehälter 2 nicht nach hinten überragt. In der nach vorn geschobenen Position befindet sich der Grenzstreuschirm in einem geschützten Bereich, so daß er insbesondere beim Beladen nicht beschädigt werden kann.

Dem Grenzstreuschirm 18 ist eine nicht dargestellte Fernbedienungseinrichtung zugeordnet, mittels welcher er wahlweise in seine Betriebs- und Außerbetriebsposition bringbar ist. In bevorzugter Weise sind Markierungs- und Einstell- bzw. Feststellelemente zur Anzeige und Festlegung der Randstreu- und Grenzstreupositionen für verschiedene Grenzabstände am Grenzstreuschirm 18 und/oder der Halterung 24 bzw. dem Bügel 25 vorgesehen.

Wenn der Schleuderdüngerstreuer, insbesondere jedoch für größere Arbeitsbreiten eingesetzt werden soll, beispielsweise von 15m und mehr, insbesondere von 24m und darüber, wird die steil abfallende Streuflanke, wie folgend beschrieben wird, durch die Reduzierung der Schleuderscheibendrehzahl der der Grenze benachbarten Schleuderscheibe 6 erzielt.

Die Schleuderscheiben 6 werden jeweils von einem eigenen, jedoch nicht dargestellten Ölmotor angetrieben. Die Ölmotore sind über nicht dargestellte Hydraulikleitungen und Einstellorgane von einer Kraftquelle antreibbar. Die Ölmotoren sind in ihrer Drehzahl über eine Regeleinrichtung unabhängig voneinander regelbar, so daß die Drehzahl für jede Schleuderscheibe 6 unabhängig von der anderen einstellbar ist.

## Patentansprüche

1. Zentrifugaldüngerstreuer mit einem Vorratsbehälter (2), zumindest zwei um aufrechte Achsen rotierend angetriebenen und mit Wurfschaufeln (9) besetzten Schleuderscheiben (6), denen das sich im Vorratsbehälter befindliche Düngermaterial über einstellbare Dosieröffnungen (5) zugeführt wird und mit außerhalb der Rotationsbahn der äußeren Ende der Wurfschaufeln angeordneten und Leitelemente (21) aufweisenden Grenzstreueinrichtung zur Erzeugung eines Streubildes mit einer zu Grenze steil abfallenden Streuflanke und zur Begrenzung der Wurfweite der Düngerpartikel im Grenzbereich, **dadurch gekennzeichnet, daß** die Grenzstreueinrichtung (18) mittels der Leitelemente (21) wahlweise zumindest in eine Randstreu- oder in eine Grenzstreuposition pro Arbeitsbreite einstellbar ist.

2. Zentrifugaldüngerstreuer nach Anspruch 1, **dadurch gekennzeichnet, daß** die Grenzstreueinrichtung (18) zur Verstellung zwischen Randstreu- und Grenzstreuposition um eine etwa mit der Drehachse der der Grenze zugewandten Schleuderscheibe (6) verschwenkbar- bzw. verschiebbar ist.

## Claims

1. Centrifugal fertiliser spreader having a hopper (2), at least two centrifugal discs (6) that are rotatingly driven about upright axes and are provided with throwing vanes (9), to which centrifugal discs the fertiliser material situated in the hopper is supplied by means of adjustable metering openings (15), and said spreader having a limiting spreading device, which is disposed outside the rotation path of the outer end of the throwing vanes and includes guide elements (21), to create a spreading pattern with a spreading edge that descends steeply to the boundary and to define the throwing width of the fertiliser particles in the boundary area, **characterised in that** the limiting spreading device (18) through the intermediary of the guide elements (21) is adjustable in an optional manner at least into an edge spreading position or a limiting spreading position per working width.

2. Centrifugal fertiliser spreader according to claim 1, **characterised in that** the limiting spreading device (18) is pivotable or respectively displaceable for adjustment between the edge spreading position and the limiting spreading position about a centrifugal disc (6) that is facing the boundary approximately relative to the axis of rotation.

## Revendications

1. Epandeur centrifuge d'engrais comportant un réservoir (2), au moins deux disques d'épandage (6) tournant autour d'axes montants et équipés de palettes d'éjection (9), les disques recevant par des orifices de dosage réglables (5) le produit en forme d'engrais placé dans le réservoir, avec au delà de la trajectoire de rotation de l'extrémité extérieure des palettes d'éjection, une installation d'épandage en limite ayant des éléments de guidage (21) pour réaliser une image d'épandage avec un flanc d'épandage chutant très fortement et pour limiter la portée d'éjection des particules d'engrais dans la zone limite,
**caractérisé en ce que**
l'installation d'épandage en limite (18) peut être réglée à l'aide d'éléments de guidage (21), sélectivement soit dans une position d'épandage en limite, soit d'épandage de bord pour chaque largeur de travail.

2. Epandeur centrifuge d'engrais selon la revendication 1,
**caractérisé en ce que**
pour son réglage l'installation d'épandage en limite (18) peut basculer ou coulisser entre une position d'épandage de bord et une position d'épandage en limite, autour de l'axe de rotation d'un disque d'épandage (6) associé sensiblement à la limite.
